Europäisches Patentamt

European Patent Office

Office européen des brevets

(11) Publication number: **0 110 227**
**B1**

(12) **EUROPEAN PATENT SPECIFICATION**

(45) Date of publication of patent specification: **16.07.86**

(21) Application number: **83111360.0**

(22) Date of filing: **14.11.83**

(51) Int. Cl.⁴: **G 06 F 9/22**

(54) Control memory organization.

(30) Priority: **24.11.82 IT 2440082**

(43) Date of publication of application:
**13.06.84 Bulletin 84/24**

(45) Publication of the grant of the patent:
**16.07.86 Bulletin 86/29**

(84) Designated Contracting States:
**DE FR GB**

(56) References cited:
**EP-A-0 031 743**
**GB-A-2 014 766**
**US-A-4 251 862**

(73) Proprietor: **HONEYWELL INFORMATION
SYSTEMS ITALIA S.p.A.
Via Martiri d'Italia 10
I-10014 Caluso (Torino) (IT)**

(72) Inventor: **Maccianti, Tiziano
Via Pascoli, 5
I-20010 Pregnana Milanese (MI) (IT)**
Inventor: **Balasini, Flavio
Via Cascina Croce 97
I-20010 Cornaredo (MI) (IT)**

Courier Press, Leamington Spa, England.

## Description

The present invention relates to the control memory organization in a microprogrammed data processing system.

A microprogrammed data processing system performs each program instruction by executing a microprogram, that is a sequence of microinstructions stored in a control memory.

Each microinstruction is executed in a machine cycle during which it generates, through decoding of its constituting bits, some electrical signals or microcommands controlling the switching on/ off of logical gates, the loading of machine registers and so on, that is the operations of the single electronic circuits which constitute the data processing system.

Each program instruction to be performed requires the independent control of a certain number of electronic circuits and, as to the timing viewpoint, the successive execution of a certain number of operations. The microinstruction capability to control in independent way the electronic circuits of the system depends on the number of bits which constitute such microinstruction, that is on the length of it.

The.longer the microinstruction is, the higher the number of electronic circuits is which can be controlled independently.

Within some limits the designer can therefore act so as to reduce to a minimum either the length of the microinstructions by activating the several electronic devices as much as possible sequentially (serial development of the instructions) or the number of subsequent microinstructions necessary for executing an instruction (parallel development of the instructions).

The serial development of the instructions involves the use of control memories with reduced parallelism and smaller number of total bits. It has therefore the advantage of using cheaper memories, but also the inconvenient of increasing the instruction execution time and of deteriorating the system performances.

The parallel development of the instructions reduces to a minimum the instruction execution time, but it requires a high parallelism of the control memory and of the related circuits, a greater memory capacity and, after all, it results more expensive.

In relation to these aspects and to the fact that the several instructions have different requirements as to sequential operations to be executed and electronic circuits to be controlled as well as different frequency of use; it is convenient to have control systems with variable parallelism.

In such a way, even though the total control memory capacity is limited, it is possible as much as possible parallel development of the program instructions which are frequently used and/or require the control of a lot of electronic circuits.

Several solutions have been proposed to achieve this result.

In the European patent application published on July 7, 1982 with number 0055392, a microprogrammed control system is described wherein a main control memory with N addressable locations is coupled in parallel to a secondary control memory with M (M<N) addressable locations.

The two memories, for addresses less than M, are addressed in parallel and supply together a microinstruction of parallelism equal to the sum of the parallelism of the two memories.

For addresses greater than M, only the main control memory is addressed; it provides microinstructions of length equal to its parallelism.

Such solution has the inconvenient of limiting the possibility of expansion of the microinstructions to a determinate set of possible addresses of control memory and imposes a strict bond as to the allocation of the microprograms.

In fact all the microprograms including microinstructions longer than the parallelism of the main control memory must be stored into a prefixed memory zone; alternatively, the access to such microinstructions can be obtained by means of jump microinstructions stored in another memory zone, but this involves an increase of the memory capacity and a deterioration of the performances.

U.S. Patent No. 4,251,862 describes a microprogrammed control system wherein a main control memory with N addressable locations is coupled to a secondary control memory with M (M<N) addressable locations.

A microinstruction read out from the main memory may specify, through a suitable bit field representative of an address of the secondary memory and a key bit, that the successive microinstruction must be expanded.

In such case, besides the addressing of the main memory for the reading out of the successive microinstruction, also the secondary memory is addressed for reading out a binary code representative of the microinstruction expansion.

In this way a longer microinstruction is obtained to the detriment of a certain reduction of the previous microinstruction.

Such solution has the advantage to allow the microinstruction expansion in any memory location, but it presents other inconvenients among which the most serious one is that the system is incompatible with the necessity, present in the control systems, of interrupting the execution of a microprogram for executing a more prioritary microprogram owing to an interruption.

In fact in data processing systems it is generally provided that a program, for instance of internal calculation or of slow peripheral unit service, may be interrupted at any time for the execution of operations required by a speed peripheral unit, as for instance a disk unit. The interruption is generally acknowledged during a machine cycle, that is a microinstruction cycle.

It may occur that, during the execution of a microinstruction recalling an expansion code for the successive microinstruction, a microprogram interruption takes place.

In such case the microinstruction executed immediately afterwards is the first microinstruction of the interrupting microprogram and the expansion code is erroneously coupled to it.

Another inconvenient is present if the system has to be modifiable, that is constituted at least partially by read/write memories. In such case it is necessary that both the main memory and the secondary one be read/write memories otherwise the expansion code cannot be modified. This involves the necessity of using logical write control circuits for both memories with the result that the circuital complications and the cost increase.

The above inconvenients are overcome by the control memory organization of the present invention as claimed in claim 1 which allows to obtain variable length microinstructions able to fulfil different operative requirements, which have to be however consistent with the possibility of microprogram interruption.

In particular the organization of the invention allows to obtain both first larger microinstructions for a prefixed range of control memory addresses, said first microinstructions being utilizable for the speed and parallel development of instructions frequently used, and second larger microinstructions for the remaining range of control memory addresses, said second microinstructions being utilizable for the development of operations requiring the parallel control of several electronic circuits, said second instruction being however of not very frequent use.

These advantages are obtained by means of a control memory organization comprising a main control memory, a secondary control memory coupled in parallel to a range of addresses of the main memory and a secondary microinstruction register devoted to store a microinstruction portion to be used as expansion code of the successive microinstruction.

Besides some very simple logical circuits are provided to allow to expand selectively a microinstruction by means of the code read out from the secondary memory or from said register and to associate correctly the expansion code to the related microinstruction even if a microprogram interruption occurs.

The organization of the invention finds a further advantageous employment in control systems wherein at least a portion of the control memory is of read/write type; in such case it allows to modify the microinstructions and the expansion codes of said portion by using write control logical circuits for an only memory.

Besides the organization of the invention may be advantageously used in microprogrammed control systems wherein the microprograms are stored at least in part into the system working memory rather than into the control memory, as for instance described in British Patent number 1,440,856.

These advantages and the features of the invention will result clearer by the following description of a preferred embodiment and by the enclosed drawings where:

Figure 1 shows as an explanatory example the format of a microinstruction,

Figure 2 shows in block diagram a preferred control memory organization according to the present invention,

Figure 3 is the timing diagram of some timing signals used in the control memory organization of Fig. 2.

Before describing the control memory organization of the present invention, it is useful to show the structure of the microprograms controlling the working of the microprogrammed data processing systems.

A microprogram is constituted by an ordered set of microinstructions.

The control action performed by a microinstruction is called execution of the microinstruction.

During each machine cycle a microinstruction is executed and the one to be executed in the subsequent cycle is fetched.

The microprogram structure is generally sequential.

In other words a microprogram is constituted by microinstructions stored into the control memory at consecutive memory addresses.

This structure allows to address a microinstruction simply by incrementing the address of the previous one, that is the microinstruction of address $K+1$ follows that one of address $K$.

But it is neither possible nor suitable to follow completely this structural criterium.

It is therefore provided for that a jump may be achieved from a microinstruction of address $K$ to a microinstruction of address A or $K+C$.

The microinstructions which control such an updating of the address for the fetching of the successive microinstruction are respectively called absolute jump microinstructions and relative jump microinstructions.

They define the jump address A or the displacement C directly or indirectly (by means of reference to a register containing address A or displacement C).

The jump microinstructions may be of unconditioned or conditioned kind.

The unconditioned jump microinstructions command the jump in any case.

The conditioned jump microinstructions command the jump only if predetermined conditions are verified inside the data processing system, said conditions being defined by the same conditioned jump microinstructions directly or indirectly.

Besides the jump microinstructions must be able to allow the address saving.

In other words a jump microinstruction of address K can fetch a microinstruction of address A or $K+C$ and, at the same time, save the subsequent address $K+1$ into a suitable register.

The address saving is necessary to return to the sequential flow of a microprogram when a microprogram subroutine recalled by a jump microinstruction has been executed.

In such case the return microinstruction defines in indirect way, with reference to the saving register, the absolute return address.

Since generally a subroutine may recall a further subroutine, that is the nesting of subroutines, each inside other, is allowed, several saving registers are used.

Such registers constitute a stack into which the several saved addresses are stored up, the one over the other, and from which the several saved addresses are read out in opposite order as regards the saving one (that is the last saved address is the first one to be read out).

Besides the use of a register stack allows to interrupt a microprogram.

In fact in modern data processing systems it is provided for that a running process performed through a microprogram or a sequence of microprograms may be interrupted at any time in order to execute more prioritary operations.

For example some peripheral units, as the disk units unprovided with buffer, require that the information exchange between them and the central unit takes place at prefixed times determined by themselves. Therefore the central unit must be able to interrupt the operations in progress in order to start an information exchange process required by the peripheral unit; at the end of such process it can resume the interrupted process.

The information exchange requests are presented to the central unit as suitable interruption signals or more simply, interruptions.

An interruption received during the execution of a microinstruction of address K causes the saving of address K+1 and the generation of an address related to the first microinstruction of an interruption treatment microprogram for serving the interrupting peripheral unit.

At the end of the interruption treatment the interrupted microprogram can be therefore resumed from address K+1.

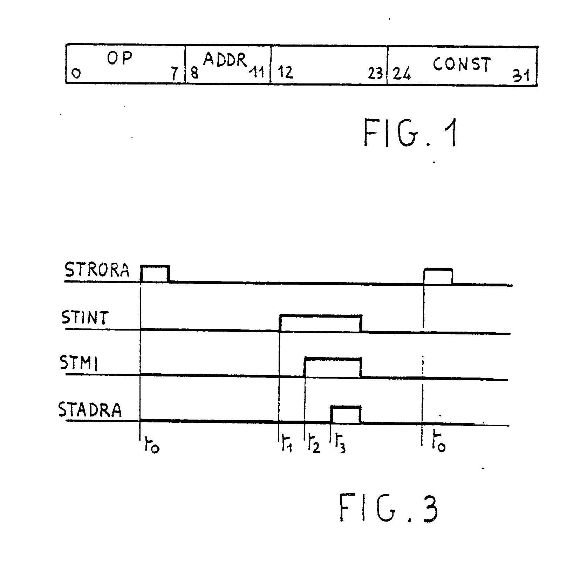

Fig. 1 shows as an explanatory example the format of a microinstruction.

The microinstructions, for instance each one of 32 bits, include a field (for instance of 8 bits) which defines an operative code OP.

The remaining 24 bits assume a variable meaning according to the operative code.

As regards a transfer microinstruction, they may define for instance a source register and a destination register where the content of the source register must be transferred to.

As regards a jump microinstruction, they define an absolute jump condition and the possible address saving.

- As regards an operative microinstruction (sum, subtraction, etc.), they define the registers containing the operands, the destination register of the operation result, etc.

Among the several microinstruction there is also the constant loading microinstruction shown in Fig. 1.

Such microinstruction includes an operative field OP (bits 0—7), a field ADDR (bits 8—11) defining the register where the constant must be transferred to, a field CONST (bits 24—31) representative of the desired constant.

Bits 12—23 are available for other purposes.

The described format is merely exemplifying.

Now the control memory organization of the invention can be considered.

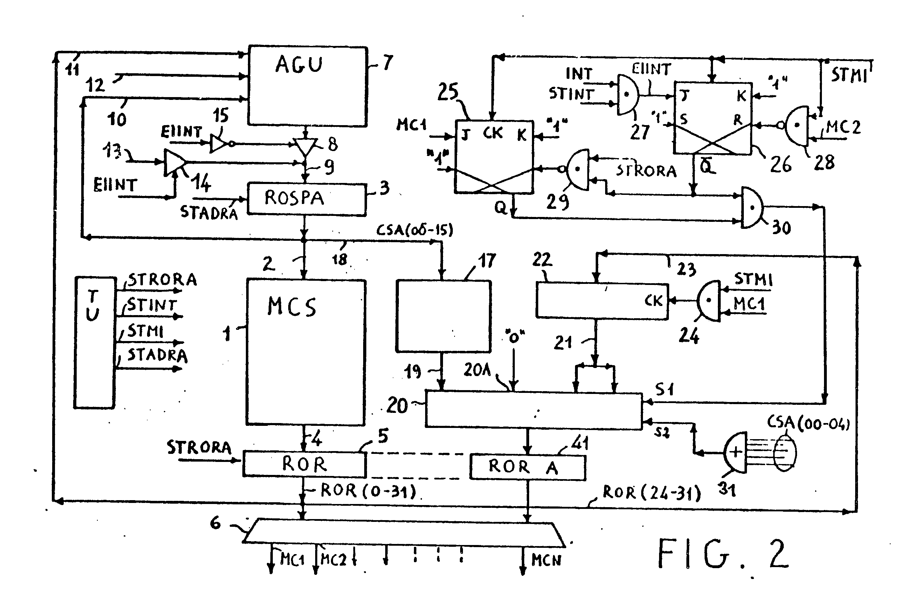

Referring to Fig. 2, a main control memory MCS 1, having for instance a parallelism of 32 bits and a capacity of 64 K addressable locations, is addressed through a 16-bit channel 2 coupled to the outputs of an addressing register ROSPA 3.

Outputs of memory 1 are connected through channel 4 to the inputs of a microinstruction register ROR 5, whose outputs ROR(0—31) are coupled to the inputs of a decoding network 6.

An address generation unit AGU 7 provides to generate the microinstruction addresses.

The outputs of unit 7 are connected, through a tristate gate set 8 and a channel 9, to inputs of register ROSPA 3.

Address generation unit 7 is of conventional kind and receives on its inputs:

the content of register 3 through a channel 10,

a portion of the content of register 5 (for instance bits ROR (15—31)) through a channel 11,

the content of one of the several system registers through channel 12.

Unit AGU 7 may be for instance carried out with integrated circuits manufactured by firm AMD with code Am 2930.

A detailed description of unit 7 is unimportant for the invention purposes.

It is enough to say that unit 7 comprises a summing network, an incrementing network, multiplexer circuits and a register stack.

Unit 7 allows to generate sequential or jump addresses and to save required addresses as already mentioned.

This is made by using the information present on channels 10, 11, 12 and suitable microcommands received by unit 7.

Such microcommands, not shown, are obtained by the decoding of the microinstruction in execution.

Register ROSPA 3, besides from outputs of unit AGU 7, may be also loaded from an interruption address channel 13 coupled to channel 9 through a tristate gate set 14.

An interruption signal EIINT, suitably timed, enables, when active, gate set 14 and inhibits gate set 8 through a NOT gate 15.

The interruption address may be a forced address, that is an address obtained by connecting suitably the several leads of channel 13 to an electrical/logical level 1 or 0.

Alternately the forced address may be read out from a suitable machine register selected by interruption signal EIINT.

Outputs ROR (0—31) of register 5 are coupled to inputs of decoder 6 which decodes the microinstruction stored in such register in a plurality of microcommands MC1, . . ., MCN, each controlling together with possible timing signals one or more electronic circuits of the data processing system.

Some of such microcommands are sent, as already said, to unit 7, but they are not shown in Fig. 2 because they are unimportant for the invention purposes.

A timing signal unit TU 16, of conventional kind, generates cyclical timing signals necessary for the system working.

As for the invention purposes, it is enough to say that timing unit 16 generates the timing signals shown in the diagram of Fig. 3.

At time $t_0$, corresponding to the start of a machine cycle, a signal STRORA is generated.

The rising edge of STRORA is used for loading into register ROR 5 the microinstruction read out from control memory 1.

At intermediate time $t_1$ of the machine cycle a signal STINT is generated.

Signal STINT is used as enabling signal for the interruptions.

At time $t_2$, subsequent to $t_1$, a signal STMI is generated; it is used as enabling signal for loading machine registers.

At time $t_3$ a signal STRADA is generated.

The rising edge of signal STRADA is used for loading register ROSPA 3.

Therefore the machine cycle comprises two phases.

During the first phase, called executive, the microinstruction is loaded into register 5, decoded and executed.

Besides the address of the microinstruction to be executed in the subsequent cycle is defined, also considering the possible microprogram interruptions.

During the second phase, which starts with STRADA, the execution of the current microinstruction is completed and with the loading of register ROSPA 3, the reading of the following microinstruction starts. In other words the second phase corresponds to a read cycle of the control memory.

At the end of the second phase, a new machine cycle starts.

The control memory organization up to now described is well known in the prior art.

Referring to Fig 2 the innovating elements are now considered.

A secondary control memory 17, having an addressable location number less than that one of memory 1 (for instance 2K), is coupled in parallel to control memory 1.

Memory 17 is addressed through a channel 18 by the less significant bits CSA (05—15) in output from register 3.

Outputs of memory 17 having a suitable parallelism (for instance 8 bits) are coupled through a channel 19 to a first input set of multiplexer 20.

Outputs of multiplexer 20 are connected to corresponding inputs of a register ROR A 41 having the same function of register ROR 5.

Register 41, as register 5, is enabled by signal STRORA.

Registers 5 and 41, even if shown as separate registers, may constitute an only register with parallelism equal to the sum of the parallelisms of memory 1 and 17.

Outputs of register 41 are coupled to corresponding inputs of decoder 6.

The information stored in register 41 provides, when it is suitably decoded, additional microcommands which act together with the ones generated by decoding the content of ROR 5.

A second input set 20A of multiplexer 20 is permanently connected to logical level 0.

A third and fourth input set of multiplexer 20 is coupled to the outputs of a register 22 through a channel 21.

Inputs of register 22, in their turn, are connected through a channel 23 to suitable outputs of register ROR 5, for instance outputs ROR (24—31).

Clock input of register 22 is coupled to the output of an AND gate 24 which receives to its inputs signal STMI and microcommand MC1.

Whenever the microinstruction in progress is a constant loading microinstruction and defines register 22 as destination register, MC1 is at logical level 1 and the constant, present on channel 23, is loaded into register 22.

The control memory organization is completed by two flip-flops 25, 26 and by logical gates 27, 28, 29, 30, 31.

J—K flip-flop 25 receives on its J input microcommand MC1, whilst its input K is permanently connected to a logical level 1.

Signal STMI is applied to clock input K of flip-flop 25.

Flip-flop 25 is set by the rising edge of STMI if MC1 is at logical level 1, otherwise it does not change its state.

J—K flip-flop 26 receives to its input J signal EIINT present on output of AND gate 27 and on its K input a signal permanently at logical level 1.

Signal STMI is applied to clock input CK of flip-flop 26.

Flip-flop 26 is set by the rising edge of STMI if at the same time the signal EIINT on output of gate 27 is at logical level 1, otherwise it does not change its state.

AND gate 27 receives on its inputs an interruption signal INT and timing signal STINT.

Reset input of flip-flop 26 is connected to the output of NAND gate 28; whenever a signal at logical level 0 is applied to such reset input R, flip-flop 26 is reset.

NAND gate 28 receives on its inputs signal STMI and microcommand MC2.

Microcommand MC2 is at logical level 1 when the microinstruction in progress is an interruption end microinstruction, that is it commands the return to an interrupted microprogram.

Reset input R of flip-flop 25 is coupled to the output of NAND gate 29.

NAND gate 29 receives to a first input signal STRORA.

A second input of gate 29 is coupled to output $\bar{Q}$ of flip-flop 26.

Multiplexer 20 is controlled by means of two selection inputs $S_1$, $S_2$.

Input $S_1$ is coupled to the output of AND gate 30 whose two inputs are connected to output $\bar{Q}$ of flip-flop 25 and to output $\bar{Q}$ of flip-flop 26 respectively.

Input $S_2$ is coupled to the output of OR gate 31 which receives on its inputs control memory addressing bits CSA (00—04).

When bits CSA (00—04) are all at logical level 0, that is the control memory address is less than 2K, output of OR 31 is at logicl level 0.

When $S_2=S_1=0$, channel 19 is coupled to outputs of multiplexer 20.

When $S_2=1$ and $S_1=0$, input set 20A is coupled to outputs of multiplexer 20.

When $S_1=1$, channel 21 is coupled to outputs of multiplexer 20 whatever the logical level on $S_2$ is.

The working of the control memory organization is now described.

When main control memory 1 is addressed with addresses less than 2K, that is CSA (00—04)=0 also secondary control memory 17 is addressed. The information read out from memory 17 is transferred to register 41 through multiplexer 20.

In other words, for addresses less than 2K, expanded microinstructions are obtained; the bit number of such microinstructions is equal to the sum of the parallelisms of memories 1 and 17.

When main control memory 1 is addressed with addresses greater than or equal to 2K, that is at least a bit of CSA (00—04) is equal to 1, an "all zeroes" code is forced into register ROR 41 through multiplexer 20.

In other words, for addresses greater than or equal to 2K, microinstructions of normal length are obtained; the bit number of such microinstructions is equal to the parallelism of memory 1.

But it is possible to store into control memory 1 at any address K a constant loading microinstruction which commands the loading of a constant into register 22.

In such case, when the microinstruction of address K is read out and loaded into register ROR 5, microcommand MC1 is generated.

During the execution of such microinstruction, signal STMI sets flip-flop 25 and the constant defined by the field of bits 24—31 (Fig. 1) of the microinstruction is loaded into register 22.

If no interruption is acknowledged during the execution of the constant loading microinstruction, flip-flop 26 remains reset and output of AND gate 30 is therefore at logical level 1.

At the start of the subsequent cycle a new microinstruction is loaded with the rising edge of STRORA into register ROR 5 and, at the same time, the information stored into register 22 is transferred into register 41.

In such way an expanded microinstruction is obtained.

The microinstruction expansion is obtained at expense of the previous microinstruction which must be of constant loading and therefore must use a bit field to define such constant.

Besides, at the same time, signal STRORA resets flip-flop 25 through NAND gate 29.

Compared with the rising edge of STRORA, signal present on input S1 of multiplexer 20 falls to logical level 0 with a time delay determined by the signal propagation along logical chain NAND 29, flip-flop 25 AND 30.

If during the execution of the microinstruction of address K (constant loading microinstruction) an interruption is acknowledged, besides flip-flop 25, also flip-flop 26 is set.

In such case S1 remains at logical level 0 and the content of register 22 is not transferred to register 41 with the subsequent rising edge of STRORA.

During all the machine cycle relating to the development of the interruption treatment microprogram, flip-flops 25 and 26 remain set.

The last microinstruction of the interruption treatment microprogram is a microinstruction of interruption treatment end and of return to the interrupted microprogram; such microinstruction generates microcommand MC2 which resets flip-flop 26.

Therefore, when the subsequent microinstruction is loaded into register ROR 5 with STRORA, also the content of register 22 is transferred at the same time to register 41 and the interrupted microprogram may be resumed without information loss.

It is to be noted that, according to the described control memory organization, an interruption microprogram cannot use microinstructions expanded by means of register 22 because this last may already contain information necessary for executing an interrupted microprogram.

However such restriction is negligible since the interrupt microprogram may be stored into control memory 1 at addresses less than 2K and therefore the microinstruction expansion may be obtained by means of control memory 17.

The control memory organization of the invention has a lot of advantages. With regard to a range of main control memory addresses, the microinstructions can be expanded by using a secondary control memory with reduced capacity addressed in parallel to the main memory.

Possible microprogram interruptions do not affect the correct execution of the control operations.

The microinstruction expansion obtained through an additional control memory may be advantageously used to execute fast operations requiring the parallel control of a lot of system electronic circuits and/or having a high frequency of use, as for instance operations of instruction interpretation or interruption treatment.

With regard to all the memory capacity, the microinstructions can be expanded by using a field of the previous microinstruction as expansion code for a subsequent microinstruction.

This involves that the expanded microinstruction be preceded by a microinstruction which generally has the only task of loading a constant into register 22 and therefore cannot be used for other purposes.

From that a slowing of the operations performed by the system generally follows.

Therefore such microinstruction expansion may be advantageously used for executing diagnostic operations requiring the parallel control of a lot of electronic devices but having a low frequency of use.

In this case too possible microprogram interruptions do not affect the correct execution of the control operations.

It is clear that the above description only relates to a preferred embodiment of the invention and that several changes may be made without departing from the scope of the invention.

Particularly secondary memory 17 may be coupled to any address range of main memory 1 rather than to the address range of lower weight. In such case OR gate 31 must be replaced by an address decoder.

## Claims

1. Control memory organization in a microprogrammed data processing system wherein a sequence of microinstructions, each one executed in a machine cycle, may be interrupted during any machine cycle by an interruption signal (INT) to execute a sequence of microinstructions, of higher priority comprising:

— a main control memory (1) with N addressable locations, said main memory being provided with addressing inputs and outputs,
— a secondary control memory (17) with M (M<N) addressable locations, said secondary memory being provided with addressing inputs and outputs,
— means (7, 3) for addressing said main control memory (1),
— a microinstruction register (5, 41) having a first set of input lines coupled to said outputs of said main memory,

characterized by the following features:

— said addressing means are coupled to said addressing inputs of both control memories,
— an expansion register (22) enabled by a first predetermined microinstruction stores a bit field of said first predetermined microinstruction,
— selective transferring means (20) are provided with at least three set of input lines and a set of output lines; a first set of input lines being coupled to said outputs of said secondary memory; a second set of input lines being coupled to the outputs of said expansion register, and a third set of input lines being fed with a prefixed logical combination ("0") indicating that microinstructions are only to be obtained from the main control memory, said set of output lines coupled to a second set of input lines of said microinstruction register,
— first logical circuits (31) receiving at their inputs at least a prefixed microinstruction address portion from said addressing means and generating a first selection signal (S1), second logical circuits (25, 26, 27, 28, 29, 30) which are enabled by said first predetermined microinstruction, locked by said interruption signal (INT) and disabled by a second predetermined microinstruction, said second logical circuits generating a second selection signal (S2),
— said selective transferring means (20) is controlled by at least three combinations of the values of said first and second selection signals (S1, S2), which enable said transferring means to transfer information from one selected set of input lines to its set of output lines.

2. Control memory organization as claimed in claim 1 characterized by that said selective transferring means comprises a multiplexer.

## Patentansprüche

1. Steuerspeicherorganisation in einer mikroprogrammierten Datenverarbeitungsanlage, wobei eine Folge von jeweils in einem Maschinenzyklus ausgeführten Mikrobefehlen während eines jeden Maschinenzyklus zwecks Ausführung einer Folge von Mikrobefehlen höherer Priorität durch ein Unterbrechungssignal (INT) unterbrochen werden kann, mit

— einem Hauptsteuerspeicher (1) mit N adressierbaren Speicherplätzen sowie Adressiereingängen und Adressierausgängen;
— einem Sekundärsteuerspeicher (17) mit M (M<N) adressierbaren Speicherplätzen sowie Adressiereingängen und Adressierausgängen;
— einer Adressiereinrichtung (7, 3) zum Adressieren des Hauptsteuerspeichers (1);
— einem Mikrobefehlsregister (5, 41) mit einer ersten Gruppe von Eingangsleitungen, die an die genannten Ausgänge des Hauptspeichers angeschlossen sind,

gekennzeichnet durch folgende Merkmale:

— die Adressiereinrichtung ist an die Adressiereingänge beider Steuerspeicher angeschlossen;
— ein durch einen ersten vorgegebenen Mikrobefehl aktiviertes Erweiterungsregister (22) speichert ein Bit-Feld des ersten vorgegebenen Mikrobefehls;
— selektive Übertragungsmittel (20) haben wenigstens drei Gruppen von Eingangsleitungen und eine Gruppe von Ausgangsleitungen; wobei eine erste Gruppe von Eingangsleitungen an die Ausgänge des Sekundärspeichers sowie eine zweite Gruppe von Eingangsleitungen an die Ausgänge des Erweiterungsregisters angeschlossen ist und eine dritte Gruppe von Eingangsleitungen eine vorgegebene logische Kombination ("0") erhält, welche anzeigt, daß Mikrobefehle nur vom Hauptsteuerspeicher zu erhalten sind;

und wobei die Gruppe von Ausgangsleitungen an eine zweite Gruppe von Eingangsleitungen des Mikrobefehlsregisters angeschlossen ist;

— erste Logikschaltungen (31) empfangen an ihren Eingängen wenigstens einen vorgegebenen Mikrobefehlsteil von der Adressiereinrichtung und erzeugen ein erstes Auswahlsignal (S1);

— zweite Logkschaltungen (25—30) werden vom genannten ersten vorgegebenen Mikrobefehl aktiviert, vom Unterbrechungssignal (INT) verriegelt und von einem zweiten vorgegebenen Mikrobefehl deaktiviert und erzeugen ein zweites Auswahlsignal (S2);

— die selektiven Übertragungsmittel (20) werden von mindestens drei Kombinationen der Werte des ersten und zweiten Auswahlsignals (S1, S2) gesteuert, welche die Übertragungsmittel für die Informationsübertragung von einer ausgewählten Gruppe von Eingangsleitungen zu ihrer Gruppe von Ausgangsleitungen aktivieren.

2. Steuerspeicherorganisation nach Anspruch 1, dadurch gekennzeichnet, daß die selektiven Übertragungsmittel einen Multiplexer enthalten.

**Revendications**

1. Organisation de mémoire de commande pour système de traitement de données microprogrammé dans lequel une séquence de microinstructions, exécutées chacune dans un cycle machine, peut être interrompue au cours de n-importe quel cycle machine par un signal d'interruption (INT) pour exécuter une séquence de microinstructions de plus grande priorité, comprenant:

— une mémoire de commande principale (1) à N positions adressables, ladite mémoire de commande étant pourvue d'entrées d'adressage et de sorties,

— une mémoire de commande secondaire (17) à M (M<N) positions adressables, ladite mémoire secondaire étant pourvue d'entrées d'adressage et de sorties,

— des moyens (7, 3) pour l'adressage de ladite mémoire commande principale (1),

— un registre de microinstruction (5, 41) comportant un premier ensemble de lignes d'entrée couplées auxdites sorties de ladite mémoire principale,

caractérisée par les dispositions suivantes:

— lesdits moyens d'adressage sont couplés auxdites entrées d'adressage des deux mémoires de commande,

— un registre d'extension (22) validé par une première microinstruction prédéterminée stocke un champ de bit(s) de ladite première microinstruction prédéterminée,

— un moyen de transfert sélectif (20) est pourvu d'au moins trois ensembles de lignes d'entrée et un ensemble de lignes de sortie; un premier ensemble de lignes d'entrée étant couplé auxdites sorties de ladite mémoire secondaire; un deuxième ensemble de lignes d'entrée étant couplé aux sorties dudit registre d'extension, et un troisième ensemble de lignes d'entrée recevant une combinaison logique prédéterminée ("0") indiquant que des microinstructions ne doivent être obtenues que de la mémoire principale, ledit ensemble de lignes de sortie étant couplé à un deuxième ensemble de lignes d'entrée dudut registre de microinstruction,

— de premiers circuits logiques (31) recevant à leurs entrées au moins une portion d'adresse de microinstruction predéfinie desdits moyens d'adressage et générant un premier signal de sélection (S1),

— de deuxièmes circuits logiques (25, 26, 27, 28, 29, 30) qui sont validés par ladite première microinstruction prédéterminée, verrouillés par ledit signal d'interruption (INT) et invalidés par une deuxième microinstruction prédéterminée, lesdits deuxièmes circuits logiques générant un deuxième signal de sélection (S2),

— ledit moyen de transfert sélectif (20) est commandé par au moins trois combinaisons des valeurs desdits premier et deuxième signaux de sélection (S1, S2), qui permettent audit moyen de transfert de tranférer de l'information de l'un sélectionné des ensembles de lignes d'entrée à son ensemble de lignes de sortie.

2. Organisation de mémoire de commande selon la revendication 1, caractérisée en ce que ledit moyen de transfert sélectif comprend un multiplexeur.

FIG. 1

FIG. 3

1

FIG. 2

0 110 227